# EUROPÄISCHE PATENTSCHRIFT

(11) **EP 3 958 649 B1**
(45) Veröffentlichungstag und Bekanntmachung des Hinweises auf die Patenterteilung: **02.10.2024**
(21) Anmeldenummer: 21190356.2
(22) Anmeldetag: 09.08.2021
(51) Int. Cl.: H05B 3/24, H05B 3/50

(54) **ELEKTRISCHE HEIZVORRICHTUNG UND VERFAHREN ZU DEREN HERSTELLUNG**
ELECTRIC HEATING DEVICE AND METHOD FOR ITS PRODUCTION
DISPOSITIF DE CHAUFFAGE ÉLECTRIQUE ET SON PROCÉDÉ DE FABRICATION

(30) Priorität: 13.08.2020 DE 102020210284
(43) Veröffentlichungstag der Anmeldung: 23.02.2022
(73) Patentinhaber: Eberspächer catem GmbH & Co. KG, 76863 Herxheim (DE)
(72) Erfinder: KLINGEBIEL, Andreas, 71672 Marbach am Neckar (DE); WUNSTORF, Dietmar, 31139 Hildesheim (DE); BOLZ, Karsten, 76870 Kandel (DE); BLÜML, Alfred, 82031 Grünwald (DE)
(74) Vertreter: Grünecker Patent- und Rechtsanwälte PartG mbB

(56) Entgegenhaltungen:
- EP-A1- 2 337 425
- EP-A1- 2 428 746
- EP-A1- 3 334 242

## Beschreibung

Die vorliegende Erfindung betrifft ein Verfahren zur Herstellung einer elektrischen Heizvorrichtung mit einem Gehäuse, welches eine Trennwand aufweist, die eine Anschlusskammer von einer Heizkammer zur Abgabe von Wärme trennt. Von der Trennwand ragt zumindest eine PTC-Heizeinrichtung in Richtung auf die Heizkammer ab. Dieses PTC-Heizelement liegt nach Art einer Heizrippe in der Heizkammer frei. Die PTC-Heizeinrichtung hat zumindest ein PTC-Element und elektrisch leitend damit verbundene Leiterbahnen, die unterschiedlichen Polaritäten zur Bestromung des PTC-Elementes zugeordnet sind. Diese Leiterbahnen sind in der Anschlusskammer elektrisch an den Leistungsstrom angeschlossen. Die EP 2 428 746 A1 offenbart eine gattungsgemäße elektrische Heizvorrichtung.

Eine derartige Heizvorrichtung ist beispielsweise aus der EP 2 337 425 A1 bekannt. Bei einer solchen elektrischen Heizvorrichtung ist die Trennwand einteilig mit einem Heizeinrichtungsgehäuse ausgebildet, welches als Heizrippe in die Heizkammer hineinragt. Bei dem zuvor genannten Stand der Technik wird die Trennwand zusammen mit dem Heizeinrichtungsgehäuse einteilig mittels Aluminium-Druckguss hergestellt. Diese Art der Herstellung erfordert eine erhebliche Menge an Aluminium. Die elektrischen Heizvorrichtung ist daher relativ schwer. Bei der zuvor erwähnten elektrischen Heizvorrichtung sind eine Vielzahl von Heizeinrichtungsgehäusen vorgesehen, die als unterseitig geschlossene Rippen in die Heizkammer hineinragen. Herstellungsbedingt müssen diese einen gewissen Abstand zueinander aufweisen, was dem Erfordernis eines kompakten Aufbaus zuwiderläuft.

Bei der Variante nach EP 3 334 242 A1 wird ein PTC-Heizelement zunächst als separates Bauteil hergestellten und als solches in einer Heizelementaufnahme, die an der Trennwand ausgebildet ist, eingesetzt, sodass das anschlussseitige Ende des Heizelementgehäuses abgedichtet in der Heizelementaufnahme der Trennwand aufgenommen ist und die Leiterbahnen mit ihren freien, anschlussseitigen Enden in der Anschlusskammer freiliegen, um dort elektrisch angeschlossen zu werden. Bei diesem Stand der Technik wird die so vormontierte PCT-Heizelemente formschlüssig in der Heizelementaufnahme gehalten bis eingepresst ist.

Diese verpressende Aufnahme bedingt eine gewisse Wandstärke auf Seiten der Trennwand. Problematisch bei dieser Ausgestaltung ist ferner die Dichtigkeit zwischen dem PTC-Heizelement und der Heizelementaufnahme. Bei den im Betrieb vorherrschenden Temperaturen kann eine Dichtung aus einem Kunststoffmaterial altern, sodass die Gefahr besteht, dass das zu erwärmende Fluid aus der Heizkammer in die Anschlusskammer gelangt. In der Anschlusskammer erfolgt indes der elektrische Anschluss des PTC-Elementes an den Leistungsstrom, so dass mit Blick auf die Betriebssicherheit keine Flüssigkeit in die Anschlusskammer gelangen darf. Andernfalls ist ein Kurzschluss zu befürchten. Insbesondere bei der Verwendung der elektrischen Heizvorrichtung in einem elektrisch betriebenen Fahrzeug, bei dem die Bordnetzspannung auch zum Betrieb der elektrischen Heizvorrichtung genutzt wird, begegnen solche Defekte erheblichen Sicherheitsbedenken.

Der vorliegenden Erfindung liegt das Problem zugrunde, ein Verfahren zur Herstellung einer kompakt bauenden elektrischen Heizvorrichtung anzugeben.

Zur Lösung des Problems wird mit der vorliegenden Erfindung ein Verfahren mit den Merkmalen von Anspruch 1 angegeben.

Im Gegensatz zu dem zuerst diskutierten Stand der Technik, bei dem das Gehäuse und auch die Heizrippe durch Aluminiumdruckguss einteilig hergestellt werden, erlaubt die vorliegende Erfindung das nachträgliche Verbinden von zunächst aus dünnem Blech bereitgestellten Komponenten, um die Anschlusskammer und/oder die Heizkammer zu definieren bzw. die dazwischen vorgesehene Trennwand. Entsprechendes gilt für etwaige von einer Gehäusewand abragende Anschlussstutzen, beispielsweise für Fluidleitungen eines Zirkulationskreislaufs, der das in der elektrischen Heizvorrichtung zu erwärmende Fluid führt. Bei der elektrische Heizvorrichtung handelt es sich insbesondere um eine elektrische Heizvorrichtung in einem Kraftfahrzeug. Üblicherweise werden flexible Schläuche an die jeweiligen Anschlussstutzen der elektrischen Heizvorrichtung angeschlossen und dagegen abgedichtet.

Das Blech kann eine Wandstärke von unter 1 Millimeter haben.

Nach dem erfindungsgemäßen Vorgehen wird zunächst eine Trennwand bereitgestellt, die eine Anschlusskammer von einer Heizkammer an dem Gehäuse trennen wird, wobei die Trennwand zum elektrischen Anschluss des PTC-Elementes in der Anschlusskammer mindestens eine Öffnung aufweist. Durch diese Öffnung kann das PTC-Element von Seiten der Anschlusskammer in das Heizeinrichtungsgehäuse eingebracht werden. Das Heizeinrichtungsgehäuses ist üblicherweise unterseitig, d.h. mit seinem in der Heizkammer liegenden Ende verschlossen. Das Heizeinrichtungsgehäuse kann in dieser Weise bereitgestellt werden. Bevorzugt ist das Heizeinrichtungsgehäuse durch ein auf Länge abgeschnittenes Stücks eines zylindrischen Rohrkörpers gebildet, der unterseitig durch Verformen des das Heizeinrichtungsgehäuse ausbildenden Blechmaterials verschlossen sein kann. Dort kann das Blechmaterial verklebt, verlötet, verschweißt und/oder durch Umbördeln oder einen abgedichtet eingesetzten Stopfen geschlossen sein. Bei dem erfindungsgemäßen Verfahren wird eine Gehäusewand mittels induktivem Löten mit der Trennwand verbunden, wobei diese Gehäusewand die Anschlusskammer und/oder die Heizkammer ganz oder teilweise umgeben kann.

Die erfindungsgemäße Lösung bietet die Möglichkeit der Herstellung einer kompakter aufgebauten elektrischen Heizvorrichtung. Im Gegensatz zu Aluminium-Druckgussteilen lassen sich die einzelnen Heizeinrichtungsgehäuse mit geringem Abstand zueinander an der Trennwand vorsehen. Dass induktive Löten erlaubt eine lokal begrenzte Erwärmung, sodass eine gute Maßhaltigkeit der zuvor hergestellten Komponenten der elektrischen Heizvorrichtung auch nach dem thermischen Fügen gegeben ist. Darüber hinaus lässt sich mit dem induktiven Löten eine sichere, fluiddichte Verbindung zwischen der Trennwand und der damit verbundenen Komponente, beispielsweise dem Heizeinrichtungsgehäuse bzw. der Gehäusewand erreichen.

Die geringe Durchwärmung der Verbindungspartner beim induktiven Löten erlaubt auch eine lokale Erwärmung und damit eine relativ dichte Anordnung von mehreren neben- oder hintereinander mit der Trennwand verbundenen Heizeinrichtungsgehäusen. Die Erfindung erlaubt dementsprechend größere Freiheitsgrade sowohl bei der Gestaltung des Heizeinrichtungsgehäuses wie auch des Gehäuses der gesamten elektrischen Heizvorrichtung. Gegenüber dem Stand der Technik muss bei der Gestaltung der elektrischen Heizvorrichtung nicht mehr Rücksicht auf die Entformung eines mittels Druckgussverfahren hergestellten Aluminiumgehäuses genommen werden.

Die Verfahrensführung beim Induktionslöten erlaubt dabei jede beliebige Art der Temperaturführung, solange sie nur unterhalb des Schmelzpunktes der Verbindungspartner liegt. Diese Verbindungspartner sind üblicherweise aus Metall, bevorzugt aus einem gestanzten Metallblech, welches üblicherweise vollflächig auf eine Oberfläche der Trennwand, des Heizelementgehäuses und/oder der Gehäusewand aufgebracht wird.

Das Induktionslöten führt zu einer vollflächigen und damit dichten Verbindung zwischen der Trennwand, dem Heizelementgehäuse und/oder der Gehäusewand. Das induktive Löten kann bevorzugt so durchgeführt werden, dass ein Kontaktelement gegebenenfalls nach einer gewissen Vorwärmung zur Verringerung der Lötzeit auf die Oberfläche der Trennwand, des Heizelementgehäuses und/oder der Gehäusewand aufgebracht wird. Danach wird die Fügestelle durch induktives Erwärmen so erhitzt, dass sich das an der Fügestelle befindliche Lot erwärmt und verflüssigt. Kapillarkräfte können dabei das Lot zwischen die zu fügenden Oberflächen ziehen und damit Lot an der Phasengrenze zwischen den beiden Verbindungspartnern der Lötverbindung konzentrieren.

Bei dem erfindungsgemäßen Verfahren wird bevorzugt ein Ring aus einem Lot benachbart zu einem Spalt zwischen den Verbindungspartnern und gebildet durch die Verbindungspartner angeordnet. Außenumfänglich bzw. innenumfänglich zu dem Ring wird ein Induktor angeordnet, der das Lot und die einen Spalt zwischen sich einschließenden Verbindungspartner im Bereich des Spalts induktiv erwärmen. Dadurch fließt das Lot nicht zuletzt aufgrund der Kapillarwirkung in den Spalt. Der Induktor wird dabei eingeschaltet, um das Lot und die den Spalt definierenden Flächen der Verbindungspartner zu erwärmen. Nachdem das Lot aufgeschmolzen worden ist, wird der Induktor ausgeschaltet. Das Lot fließt in den Spalt und erstarrt dort.

Die Verbindungspartner können aus Nichteisenmetallen, Eisenmetallen, Chromnickelstählen und nichtmetallischen Werkstoffen sowie beliebigen Kombinationen dieser Werkstoffe bestehen oder diese enthalten.

Das erfindungsgemäße Lötverfahren führt zu einer korrosionsbeständigen, insbesondere gas- und flüssigkeitsdichten Verbindung zwischen den Verbindungspartnern. Im Vergleich zu weiteren stoffschlüssigen Verbindungen wie das Kleben oder Schweißen ist die Taktzeit des Lötverfahrens unabhängig von der gesamten Verbindungslänge. Es lassen sich verschiedene Induktoren zeitgleich zum Einsatz bringen. So lässt sich das Löten zeitgleich an verschiedenen Stellen durchführen. Dabei ist die Erwärmung lokal begrenzt. Dies bietet die Möglichkeit, das Heizeinrichtungsgehäuse vor dem Löten zu bestücken. Eine Bestückung nach dem Löten ist indes zu bevorzugen.

Weitere Einzelheiten und Vorteile der vorliegenden Erfindung ergeben sich aus der nachfolgenden Beschreibung eines Ausführungsbeispiels in Verbindung mit der Zeichnung. In der Zeichnung:
Fig. 1 eine perspektivische Seitenansicht eines Ausführungsbeispiels einer elektrischen Heizvorrichtung;
Fig. 2a eine Schnittansicht mit einem Detail, welches die Verbindung zwischen der Trennwand und der Heizeinrichtungsgehäuse verdeutlicht;
Fig. 2b das Detail III gemäß der Darstellung in Figur 2;
Fig. 3 eine Ansicht gemäß Figur 2 für eine Variante vor dem Loten (links) und nach dem Löten (rechts);
Fig. 4 eine Variante zu der Darstellung gemäß Figur 2, wobei der Zustand vor dem Löten links und der Zustand nach dem Löten rechts dargestellt ist.;
Fig. 5 eine Schnittansicht einer weiteren Variante, wobei der Zustand vor dem Löten links und der Zustand nach dem Löten rechts dargestellt ist;
Fig. 6 eine vergrößerte Schnittansicht eines Übergangsbereichs zwischen der Trennwand und des Heizeinrichtungsgehäuses mit unterschiedlichen Varianten zur Aufbringung von Lot links und rechts;
Fig. 7 eine Schnittansicht der Gehäusewand und eines Teils eines Anschlussstutzens;
Fig. 8 eine Schnittansicht am Übergang zwischen dem Gehäuseoberteil und dem Gehäuseunterteil;
Fig. 9 eine Variante für die Darstellung nach Figur 8 und
Fig. 10 eine Variante zu der Darstellung gemäß Figur 6.

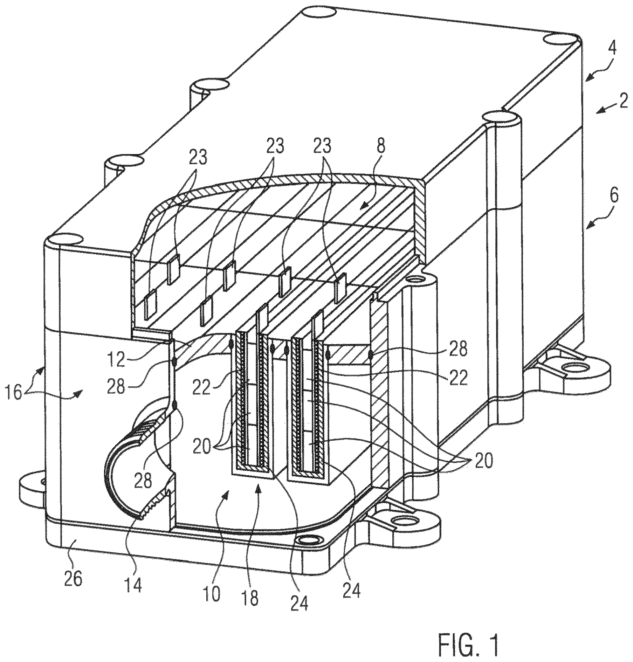

In der Figur 1 kennzeichnet Bezugszeichen 2 ein Gehäuse mit einem Gehäuseoberteil 4 und einem Gehäuseunterteil 6. Das Gehäuseoberteil 4 umgibt eine Anschlusskammer 8. Das Gehäuseunterteil 6 umgibt eine Heizkammer 10. Zwischen der Heizkammer 10 und der Anschlusskammer 8 befindet sich eine Trennwand 12. Die Trennwand 12 ist fluiddicht, sodass in der Heizkammer 10 enthaltenes, flüssiges Fluid, das zu erwärmen ist, nicht zu der Anschlusskammer 8 gelangen kann. Das Gehäuse 2 ist auf Höhe der Heizkammer 10 von Anschlussstutzen 14 überragt, die zum Anschluss von fluidführenden Leitungen innerhalb eines Kraftfahrzeuges dienen. Diese Anschlussstutzen 14 ragen von gegenüberliegenden Gehäusewänden 16 ab, die vorliegend umfänglich die Heizkammer 6 umgeben. In der Figur ist lediglich einer dieser Anschlussstutzen 14 zu erkennen, und zwar teilweise geschnitten.

Mit Bezugszeichen 18 ist ein Heizeinrichtungsgehäuse gekennzeichnet, welches vorliegend als U-förmige, unterseitig geschlossene Tasche ausgebildet ist. In jeder dieser Heizeinrichtungsgehäuse 18 sind in Höhenrichtung des Heizeinrichtungsgehäuses 18 mehrere PTC-Elemente 20 übereinander angeordnet, die zwischen Kontaktflächen angeordnet sind, die als Leiterbahnen 22 elektrisch leitend an den jeweiligen PTC-Elementen 20 anliegen und aus einem Blechmaterial gebildet sind und Verschlussfahnen 23 ausbilden, die in der Anschlusskammer elektrisch leitend angeschlossen sind. An der Außenseite der jeweiligen Leiterbahn 22 befinden sich Isolierlagen 24, sodass über Hauptseitenflächen der PTC-Elemente abgegebene Wärme zunächst die Leiterbahn 22 und danach die Isolierlage 24 durchsetzt und durch die als Heizrippe in die Heizkammer 10 hineinragenden Wände des Heizeinrichtungsgehäuses 18 hindurch geleitet wird.

Das Heizgehäuse 18 wird vorliegend aus einem verhältnismäßig dünnen Blechmaterial gebildet. Es liegt ohne Spalt an der Außenseite Isolierlagen 24 an. Das Heizgehäuse 18 kann auch unter Vorspannung daran anliegend.

Gegenüber dem Stand der Technik EP 2 337 425 A1 ist die Masse des die Heizrippe ausbildenden Materials deutlich reduziert. So kann das gezeigte Ausführungsbeispiel mit geringerem Gewicht hergestellt werden. Auch kann auf ein Keilelement verzichtet werden, welches nach EP 2 337 425 A1 in die Aufnahmetasche eingedrückt wird, um für einen guten wärmeleitenden Kontakt zwischen dem PTC-Element 20 und den die wärmeauskoppelnden Flächen der Heizrippe zu sorgen.

Auch das Gehäuse 2 besteht aus einem relativ dünnen Blechmaterial. So ist es die Heizkammer 10 umfänglich von einer im Grunde zylindrischen Blechmanschette umgeben, die mit einer Bodenplatte 26 des Gehäuses 2 induktionsverlötet ist. Die Lötstelle ist mit Bezugszeichen 28 gekennzeichnet
Auch die Trennwand 12 ist aus einem relativ dünnen Blechmaterial gebildet und mit der Innenumfangsfläche des Gehäuses 2 umfänglich fluiddicht verlötet. Auch diese Lötstelle ist mit Bezugszeichen 28 gekennzeichnet.

Auch das Heizeinrichtungsgehäuse 18 mit der Trennwand 12 verlötet. Dazu wird das Heizeinrichtungsgehäuse 18 vor dem Bestücken mit dem oder den PTC-Elementen 20 und den Leiterbahnen 22 sowie den Isolierlagen 24 in eine Öffnung 30 der Trennwand 12 eingebracht und in dieser mit der Trennwand 12 verlötet.

In gleicher Weise ist der Anschlussstutzen 14 mit der Gehäusewand 16 verlötet. Auch hier ist die Lötstelle mit Bezugszeichen 28 gekennzeichnet.

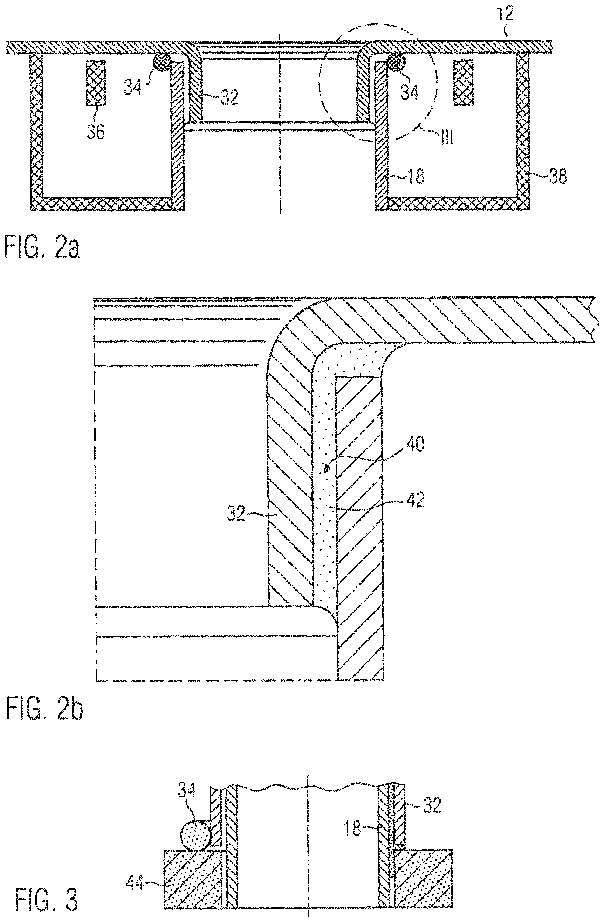

Die Figur 2 zeigt eine Schnittansicht der Verbindungsstelle zwischen der Trennwand 12 und dem Heizeinrichtungsgehäuse 18. Die Trennwand 12 ist dabei durch Tiefziehen mit einem vorspringenden Verbindungsstutzen 32 versehen. Der Verbindungsstutzen 32 ist einteilig an den die Trennwand 12 ausbildenden Blechteil angeformt. Der Verbindungsstutzen 32 greift innen in das Heizeinrichtungsgehäuse 18 ein.

Figur 2 verdeutlicht dabei mit Bezugszeichen 34 einen Ring aus Lotmaterial, dessen Innendurchmesser geringfügig größer als der Außendurchmesser des Heizeinrichtungsgehäuses 18 ist. Der Verweis auf den Durchmesser bedeutet nicht notwendig, dass das Heizeinrichtungsgehäuse 18 bzw. der Ring 34 als in der Draufsicht kreisförmig ausgeformt sind. Vielmehr kann der Ring 34 auch vieleckig, insbesondere rechteckig ausgeformt sein.

Mit Bezugszeichen 36 ist ein Induktor gekennzeichnet. Bei dem gezeigten Ausführungsbeispiel befindet sich dieser Induktor 36 zum Löten innerhalb eines Schutzgasgehäuses 38, welches im Wesentlichen dichtend einerseits gegen die der Heizkammer 10 zugewandten Unterseite der Trennwand 12 und andererseits gegen die Außenumfangsfläche des Heizeinrichtungsgehäuses 18 anliegt. Es versteht sich, dass das Löten durchgeführt wird, bevor die Bodenplatte 26 mit dem Gehäuseunterteil 6 verbunden wird.

Zum Löten wird der Induktor 36 eingeschaltet, dadurch werden das Lot sowie die sich überlappenden Wände im Bereich des Verbindungsstutzens 32 und des Heizeinrichtungsgehäuses 18 erwärmt. Lotmaterial ist dabei ein Hochtemperaturlot auf Kupfer-Basis. Beim Löten ist das Schutzgasgehäuse 38 mit Schutzgas geflutet. Infolge der Erwärmung durch den Induktor 36 schmilzt das Lot und fließt aufgrund der Kapillarwirkung in einen in Figur 2b mit Bezugszeichen 40 gekennzeichneten Spalt. Das Lot ist in Figur 2b mit Bezugszeichen 42 gekennzeichnet. Die in Figur 2b gezeigte erstarrte Form des Lots 42 ergibt sich zwanglos aufgrund des verwendeten Volumens an Lot 42 einerseits und der Kapillarwirkung andererseits.

Die Figur 3 zeigt ein alternatives Ausführungsbeispiel. Mit Bezugszeichen 18 ist das Heizeinrichtungsgehäuse innen; mit Bezugszeichen 32 der Verbindungsstutzen außen dargestellt. Die Verhältnisse können auch umgedreht verwirklicht sein, d.h. der Verbindungsstutzen 32 kann mit kleinerer Abmessung als das Heizeinrichtungsgehäuse 18 verwirklicht sein. Wesentlich ist lediglich ein gewisses Längenstück mit einer Überlappung. Mit Bezugszeichen 44 ist eine Lotstütze aus einem elektrisch nichtleitenden Material gekennzeichnet. Aufgrund dieser Materialität wird die Lotstütze 44 nicht von dem Induktor 36 erwärmt. Der Ring 34 liegt vor dem Löten auf einer Oberfläche der Lotstütze 44 auf. Nach Anschalten des Induktors 36 (nicht dargestellt) fließt das Lot 42 in den Spalt 40 und erstarrt dort. Es ergibt sich eine fluiddichte sichere Verbindung zwischen den beiden Überlappungsabschnitten des Verbindungsstutzens 32 einerseits und des Heizeinrichtungsgehäuses 18 andererseits.

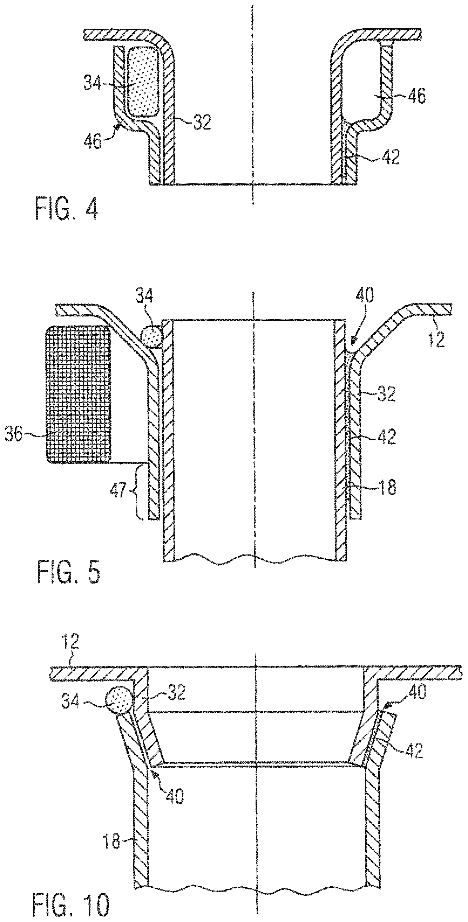

Eine weitere Variante zu der Darstellung gemäß Figur 2 ist in Figur 4 dargestellt. Dort befindet sich das Lot in Form des Ringes 34 vor dem Löten in einem umbördelten Aufnahmering 46 vor dem Löten (links). Nach dem Löten ist das Lot in den Spalt 40 geflossen. Der Aufnahmering 46 ist entleert. Dabei ist zu vermerken, dass Lot auch zwischen die Stirnseite des umbördelten Aufnahmerings 46 und der Außenumfangsfläche des Heizeinrichtungsgehäuses 18 geflossen ist. Die Variante nach Figur 4 bietet den Vorteil, dass der Ring 34 in den Ringspalt zwischen dem äußeren und dem inneren Material eingelegt werden kann. Die aneinander anliegenden Teile dichten den Aufnahmebereich für das Lot 42 im Wesentlichen ab. Dadurch werden Umwelteinflüsse beim Löten im Bereich der Lotstellte reduziert.

Die Figur 5 zeigt eine weitere Variante, bei welcher das Heizeinrichtungsgehäuse 18 innerhalb des Verbindungsstutzens 32 aufgenommen ist, der einteilig mit der Trennwand 12 ausgeformt ist. Der Überlappungsbereich erstreckt sich im Wesentlichen über die Höhenerstreckung des Induktors 36. Allerdings ist in der Figur unten ein mit Bezugszeichen 47 gekennzeichneter Randbereich des Überlappungsbereiches gezeigt, der von der Wirkung des Induktors 36 nicht erfasst wird. Dort sind dementsprechend die einander gegenüberliegenden Verbindungspartner kälter, sodass das von oben schmelzflüssig eintretende Lot 42 in diesem Bereich zwangsläufig erstarrt und das Ausfließen des Lots 42 aus dem Spalt 40 verhindert. Das Lot 42 erkaltet - wie Figur 5 rechts andeutet - mit Abstand zu dem unteren Ende des Überlappungsbereiches.

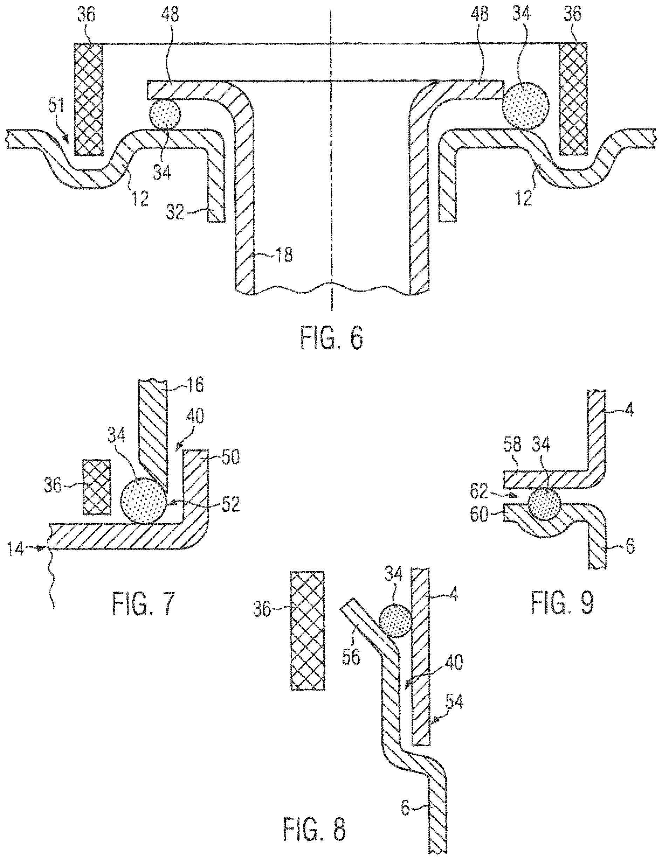

Die Figur 6 zeigt eine Variante, bei welcher der Verbindungsstutzen 32 außen und das Heizeinrichtungsgehäuse 18 innen vorgesehen ist. Das Heizeinrichtungsgehäuse 18 ist mit einem mit Bezugszeichen 48 gekennzeichneten Anlageflansch versehen. Auch dieser Anlageflansch 48 ist durch Biegen von Blechmaterial, welches das Heizeinrichtungsgehäuse 18 ausformt, gebildet.

Der Ring 34 ist in Figur 6 links in einem Ringspalt angeordnet, der in Längsrichtung des Heizeinrichtungsgehäuses 18 von dem Anlageflansch 48 einerseits und der Trennwand 12 andererseits begrenzt ist.

Bei der in Figur 6 rechts dargestellten Variante befindet sich der Ring 34 vor dem Löten radial außerhalb des Anlageflansches 48. Der Induktor 36 ist ringförmig ausgestaltet und umgibt den Anlageflansch 48 außenumfänglich. Die Trennwand 12 ist radial außerhalb des Anlageflansches 48 in Richtung der Heizkammer 10 zur Schaffung eines ringförmigen Aufnahmebereichs 51 für den förmigen Induktor 36 eingeformt.

Die Figur 7 zeigt einen Teil des Anschlussstutzens 14, der mit einem verbreiterten Anlageflansch 50 versehen ist. Die Gehäusewand 16 hat eine nach außen abgeschrägte Bohrung 52. Zwischen dem die Bohrung 52 begrenzenden Material der Gehäusewand 16 und dem Anschlussstutzen 14 ist der Ring 34 aus Lot vorgesehen. Auch bei diesem Ausführungsbeispiel dringt das Lot infolge der Erwärmung durch den Induktor 36 und aufgrund der Kapillarwirkung in den Spalt 40 zwischen die Innenfläche der Gehäusewand 16 und den Anlageflansch 50.

Eine Variante zu Figur 7 ist in Figur 8 dargestellt. Bei dieser Variante ist das Gehäuseunterteil 6 nach außen umbogen zur Ausbildung einer im Querschnitt L-förmigen Aufnahme 54. In dieser L-förmigen Aufnahme ist das freie Ende des Gehäuseoberteils 4 eingesetzt. Das freie obere Ende des Gehäuseunterteils 6 ist mit einer trichterförmigen Ausbiegung 56 versehen. In dieser ist der Ring 34 vor dem Löten geklemmt. In den mit Bezugszeichen 40 gekennzeichneten Spalt fließt das Lot bei Aktivierung des Induktors 36.

Die Figur 9 zeigt eine Variante. Bei diesem Ausführungsbeispiel haben das Gehäuseoberteil 4 und das Gehäuseunterteil 6 jeweils einander gegenüberliegende Flanschflächen 58, 60. Die Flanschfläche 60 des Gehäuseunterteils 6 ist mit einer ringförmig umlaufenden Vertiefung 62 versehen, in der der Ring 34 aufgenommen ist.

Die Figur 10 zeigt eine weitere Variante zur Verbindung des Heizeinrichtungsgehäuses 18 mit der Trennwand 12. Auch hier hat die Trennwand 12 einen Verbindungsstutzen 32. Dieser ist allerdings an seinem freien Ende konisch nach innen zulaufend ausgeformt. In korrespondierender Weise ist das Heizeinrichtungsgehäuse 18 an seinem freien Ende konisch nach außen umgeformt. Durch diese Ausformung ergibt sich eine Vorpositionierung der in Längsrichtung des Heizeinrichtungsgehäuses 18 gefügten Bauteile. Der Ring 34 sitzt vor dem Löten zwischen dem freien Ende des Heizeinrichtungsgehäuses 18 und der sich darüber erstreckenden Trennwand 12.

### Bezugszeichenliste

- 2: Gehäuse
- 4: Gehäuseoberteil
- 6: Gehäuseunterteil
- 8: Anschlusskammer
- 10: Heizkammer
- 12: Trennwand
- 14: Anschlussstutzen
- 16: Gehäusewand
- 18: Heizeinrichtungsgehäuse
- 20: PTC-Element
- 22: Leiterbahn
- 23: Anschlussfahne
- 24: Isolierlage
- 26: Bodenplatte
- 28: Lötstelle
- 30: Öffnung
- 32: Verbindungsstutzen
- 34: Ring
- 36: Induktor
- 38: Schutzgasgehäuse
- 40: Spalt
- 42: Lot
- 44: Lotstütze
- 46: Aufnahmering
- 47: Randbereich
- 48: Anlageflansch
- 50: Anlageflansch
- 51: Aufnahmebereich
- 52: Bohrung
- 54: L-förmige Aufnahme
- 56: trichterförmige Ausbiegung
- 58: Flanschfläche
- 60: Flanschfläche
- 62: Vertiefung

## Patentansprüche

1. Verfahren zur Herstellung einer elektrischen Heizvorrichtung (2), bei dem zunächst eine eine Anschlusskammer (8) von einer Heizkammer (10) zur Abgabe von Wärme trennende Trennwand (12) bereitgestellt wird, die zumindest eine Öffnung (30) zum elektrischen Anschluss eines PTC-Elementes (20) in der Anschlusskammer (8) aufweist, **dadurch gekennzeichnet, dass**
eine von der Trennwand (12) abragende und die Anschlusskammer (8) und/oder die Heizkammer (10) begrenzende Gehäusewand (16) und/oder ein das PTC-Element (20) und zur Bestromung des PTC-Elementes (20) mit unterschiedlicher Polarität mit diesem elektrisch leitend verbundene Leiterbahnen (22) aufnehmendes Heizeinrichtungsgehäuse (18) induktiv mit der Trennwand (12) verlötet wird bzw. werden.

2. Verfahren nach Anspruch 1, **dadurch gekennzeichnet, dass** nach dem Verlöten das PTC-Element (20) und die Leiterbahnen (22) in das Heizeinrichtungsgehäuse (18) eingebracht und die Leiterbahnen (22) elektrisch in der Anschlusskammer (8) angeschlossen werden.

3. Verfahren nach Anspruch 1 oder 2, **dadurch gekennzeichnet, dass** ein Ring (34) aus Lot (42) benachbart zu einem Spalt (40) zwischen der Trennwand (12) und der Gehäusewand (16) oder dem Heizeinrichtungsgehäuse (18) angeordnet und induktiv aufgeschmolzen wird, sodass das Lot (42) in den Spalt (40) fließt und dort erstarrt.

## Claims

1. Method for producing an electric heating device (2), in which initially a partition wall (12) separating a connection chamber (8) from a heating chamber (10) for emitting heat is provided, which comprises at least one opening (30) for the electrical connection of a PTC element (20) in the connection chamber (8), **characterized in that**
a housing wall (16) projecting from the partition wall (12) and limiting the connection chamber (8) and/or the heating chamber (10) and/or a heating assembly housing (18) accommodating the PTC element (20) and strip conductors (22) electrically conductively connected thereto for energizing the PTC element (20) with different polarity is or are inductively soldered to the partition wall (12).

2. Method according to claim 1, **characterized in that** after soldering, the PTC element (20) and the strip conductors (22) are inserted into the heating assembly housing (18) and the strip conductors (22) are electrically connected in the connection chamber (8).

3. Method according to claim 1 or 2, **characterized in that** a ring (34) of solder (42) is arranged adjacent to a gap (40) and inductively melted so that the solder (42) flows into the gap (40) and solidifies there.

## Revendications

1. Procédé de fabrication d'un dispositif de chauffage électrique (2), au cours duquel une paroi de séparation (12), qui sépare une chambre de raccordement (8) et une chambre de chauffage (10) permettant d'émettre de la chaleur et qui présente au moins un orifice (30) permettant le raccordement électrique d'un élément PTC (20) dans la chambre de raccordement (8), est d'abord fournie,
**caractérisé en ce que**
une paroi d'enveloppe (16), s'étendant à partir de la paroi de séparation (12) et délimitant la chambre de raccordement (8) et/ou la chambre de chauffage (10), et/ou une enveloppe de dispositif de chauffage (18), accueillant l'élément PTC (20) et des pistes conductrices (22) reliées de manière électriquement conductrice audit élément PTC avec une polarité différente en vue de l'alimentation en courant dudit élément PTC (20), est/sont soudée(s) par induction à la paroi de séparation (12).

2. Procédé selon la revendication 1, **caractérisé en ce que**, après le soudage, l'élément PTC (20) et les pistes conductrices (22) sont introduits dans l'enveloppe de dispositif de chauffage (18) et les pistes conductrices (22) sont raccordées électriquement dans la chambre de raccordement (8).

3. Procédé selon la revendication 1 ou 2, **caractérisé en ce qu'**un anneau (34) d'alliage de soudure (42) est agencé au voisinage d'une fente (40) entre la paroi de séparation (12) et la paroi d'enveloppe (16) ou l'enveloppe de dispositif de chauffage (18) et est fondu par induction, de sorte que l'alliage de soudure (42) s'écoule dans la fente (40) et s'y solidifie.
